Europäisches Patentamt

European Patent Office

Office européen des brevets

(19)

(11) Veröffentlichungsnummer: **0 400 033 B1**

(12) # EUROPÄISCHE PATENTSCHRIFT

(45) Veröffentlichungstag der Patentschrift:
11.09.91 Patentblatt 91/37

(51) Int. Cl.⁵: **B62D 7/00, B62D 9/00, B62D 5/06**

(21) Anmeldenummer: **89902040.8**

(22) Anmeldetag: **09.02.89**

(86) Internationale Anmeldenummer:
**PCT/EP89/00116**

(87) Internationale Veröffentlichungsnummer:
**WO 89/07545 24.08.89 Gazette 89/20**

(54) **AUFHÄNGUNG EINER LENKBAREN RADACHSE EINES SCHLEPPERS.**

(30) Priorität: **11.02.88 DE 3804223**

(43) Veröffentlichungstag der Anmeldung:
**05.12.90 Patentblatt 90/49**

(45) Bekanntmachung des Hinweises auf die
Patenterteilung:
**11.09.91 Patentblatt 91/37**

(84) Benannte Vertragsstaaten:
**AT DE FR GB IT**

(56) Entgegenhaltungen:
**BE-A- 6 872 008
CH-A- 216 859
DE-A- 1 630 721
DE-A- 2 928 577
FR-A- 2 591 539
US-A- 405 804
US-A- 2 788 858
Patent Abstracts of Japan, Band 10, Nr. 167
(M-488)(2223), 13. Juni 1986**

(73) Patentinhaber: **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder: **HAUPT, Josef
Motharistrasse 5
W-7991 Oberteuringen (DE)**
Erfinder: **TISCHER, Werner
Im Brühl 33
W-7072 Heubach (DE)**
Erfinder: **GAZYAKAN, Ünal
Peoriastrasse 32
W-7990 Friedrichshafen (DE)**
Erfinder: **BÜRKER, Rainer
Im Hegenried 12
W-7980 Ravensburg (DE)**

(74) Vertreter: **Raue, Reimund
Zahnradfabrik Friedrichshafen AG Löwentaler
Strasse 100 Postfach 2520
W-7990 Friedrichshafen 1 (DE)**

## Beschreibung

Die Erfindung bezieht sich auf eine Aufhängung einer lenkbaren Radachse eines Schleppers, an deren Achskörper Radköpfe mit Rädern über Spurhebel und eine geteilte oder ungeteilte Spurstange mittels eines Lenkzylinders schwenkbar geführt sind. Der Achskörper ist an seiner Rückseite mit einem deichselartigen Schublenker starr verbunden, welcher zentrisch zur Quermittelebene des Achskörpers und im wesentlichen horizontal verlaufend an seinem der Radachse abgewandten Ende am Fahrgestell des Schleppers in einem Kugelgelenk geführt ist. Durch Betätigung des Lenkzylinders während eines Lenkvorgangs wird das Fahrgestell um das Kugelgelenk als Drehpunkt horizontal so verlagert, daß sich der Abstand zwischen dem Achsschenkel des kurveninneren Rades und dem Fahrgestell vergrößert.

Eine Aufhängung einer Radachse der vorgenannten Bauart ist aus der DE-A-1630721 bekannt geworden. Um eine Verlagerung der Radachse gegenüber dem Fahrzeugkörper bei einem Lenkeinschlag zu erzwingen, ist die Spurstange am Fahrzeugkörper quer zur Fahrtrichtung festgelegt. Hierbei kann die Spurstange geteilt oder aber ungeteilt sein.

Die bekannte Aufhängung einer Radachse ist mit einer Reihe von Nachteilen behaftet. Die Spurstange hat eine Doppelfunktion zu erfüllen. Neben ihrer eigentlichen Funktion als Spurstange muß sie die Seitenkräfte abstützen, die auf die Radachse einwirken. Um diese Doppelfunktion erfüllen zu können, muß die Spurstange entsprechend dimensioniert sein. Die Anlenkung der Spurstange am Fahrzeugkörper bedingt ferner, daß die Spurstangenabschnitte bei Verwendung einer geteilten Spurstange nur relativ kurz sein können. Hierdurch ergeben sich ungünstige Kräfteverhältnisse. Aus der Anlenkung der Spurstange am Fahrzeugkörper resultieren Spurwinkeländerungen beim Pendeln der Radachse. Dies führt beim praktischen Einsatz zu unerwünschten Beschädigungen der Grasnarbe.

Die der vorliegenden Erfindung zugrundeliegende Aufgabe besteht darin, die Aufhängung einer lenkbaren Radachse der eingangs genannten Art unter Beibehaltung des Vorteils eines geringen Wendekreisdurchmessers so zu verbessern, daß die geschilderten Nachteile zuverlässig vermieden werden.

Diese Aufgabe wird an einer Aufhängung einer lenkbaren Radachse eines Schleppers dadurch gelöst, daß zur horizontalen Verlagerung des Fahrgestells während eines Lenkvorgangs eine gesonderte Seitenführungsstrebe Verwendung findet. Diese Seitenführungsstrebe ist zwischen der Radachse und dem Fahrgestell getrennt von der Spurstange angeordnet. Sie verläuft etwa parallel zum Achskörper. Unter Beibehaltung eines geringen Wendekreisdurchmessers ist bei der erfindungsgemäßen Anordnung eine Trennung zwischen den Bauteilen bzw. den Funktionen, die für die seitliche Verlagerung des Fahrzeugkörpers und der Lenkung der Radachse vorgesehen sind, vorhanden Bei der Anordnung nach der Erfindung erfüllt die geteilte oder ungeteilte Spurstange ausschließlich die Funktion einer Spurstange. Dies bedeutet, daß die Seitenführungsstrebe die Abstützung der Seitenkräfte übernimmt. Bei dieser Anordnung treten beim Pendeln der Radachse keine Spurwinkeländerungen auf, so daß die Bodenoberfläche geschont wird und die Lenkbarkeit der Radachse — auch bei hohen Fahrgeschwindigkeiten — immer gewährleistet ist. Ein weiterer wesentlicher Vorteil der erfindungsgemäßen Lösung besteht darin, daß in der Verwendung verschiedener Radachsen variiert werden kann. Gleiche Schlepper-Basismodelle können mit abweichenden Radachsen bestückt werden, da die Verwendung von Standardachsen möglich ist, ohne daß insbesondere Modifikationen an der Lenkung erforderlich wären. Umgekehrt kann eine Standardachse für abweichende Schlepper-Basismodelle Verwendung finden. In den genannten Fällen beschränken sich bauliche Abweichungen lediglich auf die Seitenführungsstreben, die unterschiedlich lang ausgebildet sein können.

Bei einer vorteilhaften Ausgestaltung einer erfindungsgemäßen Aufhängung einer lenkbaren Radachse sind die Spurstangenabschnitte einer geteilten Spurstange an einem Drehhebel eines Drehantriebes angelenkt. Der Drehantrieb ist am Achskörper oder am Schublenker befestigt. Die Seitenführungsstrebe ist mit radialem Abstand zur Drehachse des Drehantriebes angelenkt. In diesem Fall besteht die Möglichkeit, das Maß der Seitenverschiebung des Fahrgestells gegenüber der Radachse zu verändern, indem der radiale Abstand der Seitenführungsstrebe von der Drehachse variiert wird. Eine Veränderung des Maßes der Seitenverschiebung ist durch Anlenkung der Seitenführungsstrebe mit einem Radius zum Achsschenkel ebenfalls möglich.

Bei einer weiteren erfindungsgemäßen Ausführungsform ist die Seitenführungsstrebe Bestandteil eines doppeltwirkender Hydraulikzylinders. Dieser Hydraulikzylinder ist mit dem Lenkzylinder durch gemeinsame Beaufschlagung mit Druckmittel synchron zu betätigen.

In der Druckmittelversorgung des doppeltwirkenden Hydraulikzylinders kann in vorteilhafter Weise ein 4/3-Wegeventil angeordnet sein, das in Abhängigkeit von der Stellung eines Lenkventils der Lenkung oder einer Kolbenstange des Lenkzylinders elektromagnetisch, hydraulisch oder mechanisch betätigbar ist.

Nach einem weiteren vorteilhaften Merkmal der Erfindung können der Lenkzylinder und der doppeltwirkende Hydraulikzylinder hydraulisch gekoppelt sein. Hierbei ist zumindest ein Arbeitsraum des Lenkzylinders derart über eine Verbindungsleitung an einen Arbeitsraum des doppeltwirkenden Hydraulikzylinders ange-

2

schlossen, daß das während des Lenkvorgangs aus dem Arbeitsraum des Lenkzylinders verdrängte Druckmittel dem Arbeitsraum des Hydraulikzylinders zugeführt wird. Der Lenkzylinder und der zur Verlagerung des Fahrgestells dienende Hydraulikzylinder sind somit in Reihe geschaltet, wobei das während eines Lenkvorgangs aus dem einen Arbeitsraum des Lenkzylinders durch dessen Kolben verdrängte Druckmittel über die Verbindungsleitung in den entsprechenden Arbeitsraum des Hydraulikzylinders geleitet wird und dessen Kolben verschiebt. In der entgegengesetzten Lenkrichtung kann ebenfalls eine hydraulische Reihenschaltung verwirklicht sein. Hier ist der Lenkzylinder dem Hydraulikzylinder nachgeschaltet. Dabei soll ein weiterer Arbeitsraum des Hydraulikzylinders unmittelbar aus einem Lenkventil mit Druck beaufschlagbar sein, und das aus dem gegenüberliegenden Arbeitsraum verdrängte Druckmittel wird dem Lenkzylinder zugeführt. Durch die entsprechende Reihenschaltung von Lenkzylinder und Hydraulikzylinder ergibt sich eine sehr zweckmäßige Ausgestaltung der Erfindung, bei der der Herstellungsaufwand gering ist.

Weiterhin besteht in vorteilhafter Weise die Möglichkeit, bei einer hydraulischen Kopplung der Lenkbetätigung und der Stelleinrichtung ein Umschaltventil vorzusehen, mit welchem die Einrichtung wahlweise auf eine reine Achsschenkellenkung und auf eine Achsschenkellenkung mit Verlagerung des Fahrgestells gebenüber der Radachse geschaltet werden kann.

Die erfindungsgemäße Aufhängung einer lenkbaren Radachse kann grundsätzlich bei einer ungefederten als auch gefederten Achse verwirklicht werden. Insbesondere bei höheren Fahrgeschwindigkeiten ist die Federung der Radachse zweckmäßig bzw. erforderlich. Bei einer lenkbaren Radachse, die gegenüber dem Fahrgestell mittels Federdämpferelementen abgefedert ist, ist es vorteilhaft, die Federdämpferelemente gelenkig mit dem Achskörper und mit dem Fahrgestell zu verbinden.

Zur weiteren Erläuterung der Erfindung wird auf die Zeichnung verwiesen, in der Ausführungsbeispiele vereinfacht dargestellt sind. Es zeigen

Fig. 1     eine Frontansicht eines Schleppers mit einem Schnitt im Bereich der Aufhängung seiner über einen Drehantrieb gelenkten Radachse,

Fig. 2     eine Draufsicht auf den Schlepper gemäß Fig. 1, wobei die in der Darstellung hervorgehobene Lenkachse ihren maximalen Lenkeinschlag aufweist,

Fig. 3     eine schematische Darstellung der Aufhängung einer ungefederten Radachse, bei der ein Lenkzylinder als Stelleinrichtung dient,

Fig. 4     einen Schlepper, bei dem die Seitenführungsstrebe als doppeltwirkender Hydraulikzylinder ausgebildet ist, der in Abhängigkeit von der Stellung eines Lenkzylinders druckmittelbeaufschlagbar ist und

Fig. 5     eine im wesentlichen mit der Anordnung nach Fig. 4 übereinstimmende Ausführungsform, wobei aber der Lenkzylinder und der Hydraulikzylinder hydraulisch gekoppelt sind.

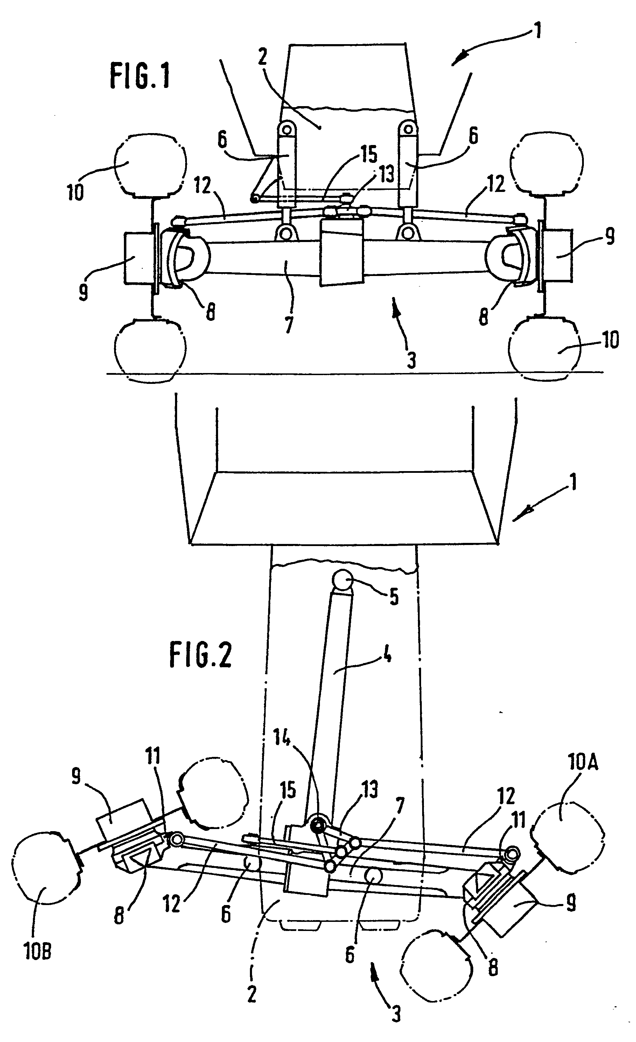

In den Fig. 1 und 2 ist mit 1 ein Schlepper bezeichnet, an dessen Fahrgestell 2 eine als Vorderachse dienende lenkbare Radachse 3 aufgehängt ist. Dabei weist die Radachse 3 an ihrer Rückseite einen starr mit ihr verbundenen rohrförmigen Schublenker 4 auf, der an seinem der Achse abgewandten Ende mittels eines Kugelgelenkes 5 allseitig frei drehbar am Fahrgestell 2 geführt ist. Die in den Fig. 1 und 2 dargestellte Radachse 3 ist weiterhin mittels Federdämpferelementen 6 gegenüber dem Fahrgestell 2 abgefedert, wobei die Federdämpferelemente gelenkig mit einem mittleren starren Achskörper 7 und dem Fahrgestell 2 verbunden sind. Dieser Achskörper 7 nimmt an seinen Achsschenkeln 8 schwenkbare Radköpfe 9 auf, mit welchen Räder 10 verbunden sind. An jedem der Radköpfe 9 greift ein Spurhebel 11 an, wobei jeder der Spurhebel 11 über eine geteilte Spurstange 12 verbunden ist mit einem Drehhebel 13 eines Drehantriebes 14 der Lenkeinrichtung. Das Fahrgestell 2 und die Radachse 3 sind weiterhin mittels einer Seitenführungsstrebe 15, die am Fahrgestell 2 und am Drehhebel 13 angelenkt ist, zueinander geführt.

Die Funktion der in den Fig. 1 und 2 dargestellten Anordnung ist folgende :

Die starr mit dem Schublenker 4 verbundene Radachse 3 kann, gemeinsam mit dem Schublenker 4 um das Kugelgelenk 5 schwenkend, ein- und ausfedern und stützt sich dabei über die Federdämpferelemente 6 am Fahrgestell 2 ab. Der Schublenker 4 dient dabei als Längskraftabstützung der Radachse 3 und nimmt die von den Rädern auf die Radachse 3 übertragenden Anfahr- und Bremsmomente auf. Zur Seitenkraftabstützung der Radachse 3 dient die Seitenführungsstrebe 15. Wird, wie in Fig. 2 dargestellt, der Drehhebel 13 über eine nicht näher dargestellte Lenkbetätigungseinrichtung in eine Stellung bewegt, in der der Schlepper eine Rechtskurve durchfährt, so werden vom Drehhebel 13 aus die Radköpfe 9 über die Spurstangenhälften 12 und die Spurhebel 11 in Richtung ihres maximalen Lenkeinschlags verschwenkt. Gleichzeitig verlagert der als Stelleinrichtung wirkende Drehhebel 13 das Fahrgestell 2 über die Seitenführungsstrebe 15 in horizontaler Richtung. Das Fahrgestell 2 wird dabei frontseitig um das als Drehpunkt wirkende Kugelgelenk 5 in Richtung des kurvenäußeren Rades 10A verlagert. Damit vergrößert sich der Freiraum für den Lenkeinschlag des kurveninneren Rades 10B. Der Lenkeinschlag des kurvenäußeren Rades 10A, der aufgrund der Lenkgeometrie ohnehin einen geringeren Lenkwinkel aufweist, führt trotz der Verlagerung des Fahrgestells 2 nicht zu einer Anlage des Rades 10A am Fahrgestell 2, da der entsprechende Abschnitt des Rades 10A vor das frontseitige Ende des Fahrgestells 2 einschwenkt. Sollte die Radachse 3 zur Verringerung des Radstandes in größerem Abstand vom frontseitigen Ende des Fahrgestells 2 angeordnet sein, so empfiehlt es sich, im Vorderachsbock des Schleppers 1 Ausnehmungen vorzusehen, die als Freiraum für den Lenkeinschlag des jeweils kurvenäußeren Rades 10 dienen.

Der Darstellung ist zu entnehmen, daß aufgrund der Verlagerung des Fahrgestells 2 gegenüber der aus Radachse 3 und Schublenker 4 bestehenden Kombination der Lenkeinschlag erheblich vergrößert werden kann. Darüber hinaus tritt aufgrund der gelenkigen Verbindung der aus Radachse 3 und deichselartigen Schublenker 4 bestehenden Einheit am Fahrgestell 2 ein Lenkverhalten des Schleppers 1 auf, das übereinstimmt mit dem Lenkverhalten knickgelenkter Fahrzeuge. Die Hinterachse des Schleppers gelangt nämlich in eine Winkelstellung zur Vorderachse 3, wodurch der Wendekreisdurchmesser erheblich verringert werden kann.

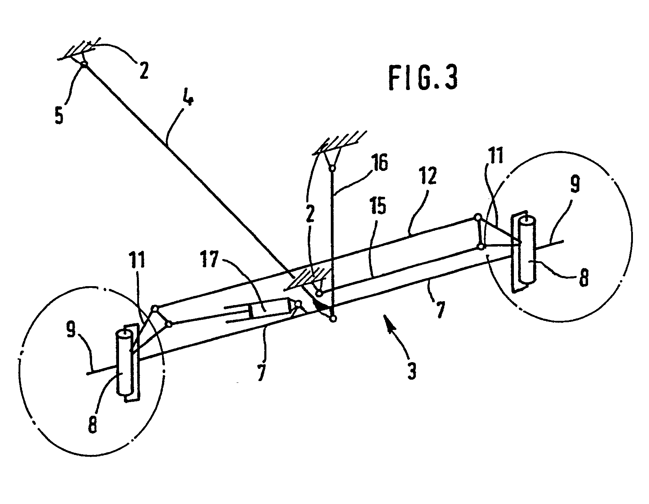

Der Fig. 3 zufolge soll die Radachse 3 ungefedert am Fahrgestell 2 aufgehängt sein. Dabei ist der Achskörper 7 ebenfalls starr verbunden mit einem am Fahrgestell 2 über ein Kugelgelenk 5 geführten Schublenker 4. In Verlängerung des Schublenkers 4 greift an der Vorderseite des Achskörpers 7 ein vertikaler Lenker 16 an, der jeweils gelenkig mit dem Fahrgestell 2 und dem Achskörper 7 verbunden ist. Die Radachse 3 weist weiterhin eine einstückig ausgebildete Spurstange 12 auf, die an Spurhebeln 11 beider Radköpfe 9 angelenkt ist. Einer der Spurhebel 11 steht mit einem doppeltwirkenden Lenkzylinder 17 in Verbindung, während zwischen dem anderen Spurhebel 11 und dem Fahrgestell 2 die Seitenführungsstrebe 15 angeordnet ist.

Der mit der Seitenführungsstrebe 15 verbundene Spurhebel 11 wirkt in diesem Fall als Stelleinrichtung, indem je nach Anlenkung der Seitenführungsstrebe 15 am Spurhebel 11 das Fahrgestell 2 mit unterschiedlichem Weg verlagert werden kann.

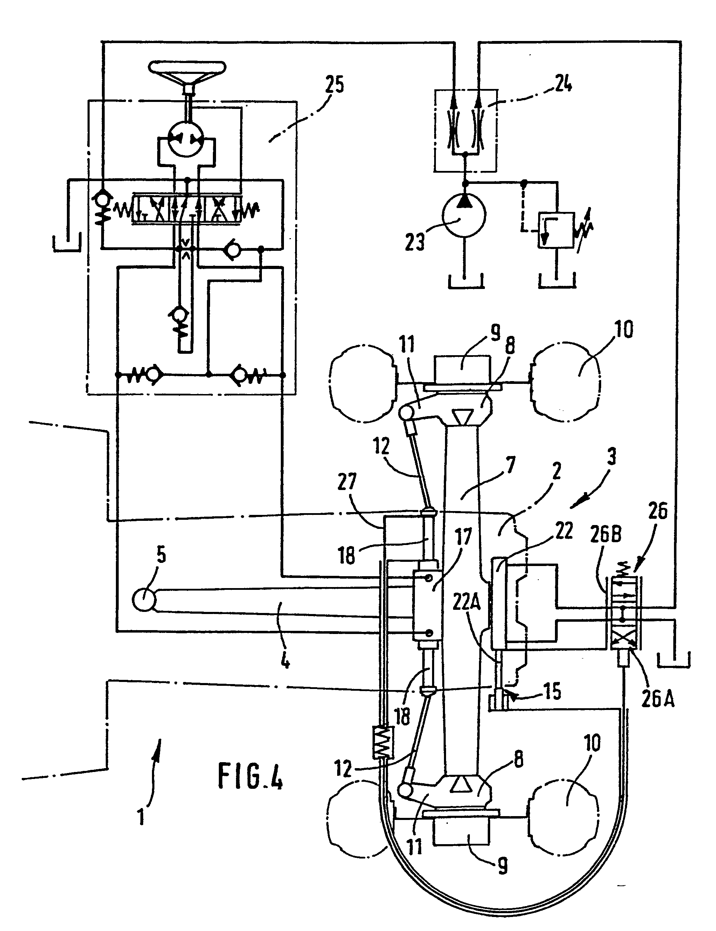

Bei dem Ausgestaltungsbeispiel gemäß Fig. 4 erfolgt die Lenkung der Radachse 3 mittels eines doppeltwirkenden Lenkzylinders 17. Die Seitenführungsstrebe 15 und die mit dieser zusammenwirkende Stelleinrichtung sind als ein doppeltwirkender Hydraulikzylinder 22 ausgebildet, der einerseits an der Radachse 3 und andererseits am Fahrgestell 2 angelenkt ist. Zur gemeinsamen Druckmittelversorgung des doppeltwirkenden Lenkzylinders 17 und des doppeltwirkenden Hydraulikzylinders 22 dient eine Hydraulikpumpe 23. Über einen Stromteiler 24 wird der Förderstrom der Hydraulikpumpe 23 mengenmäßig aufgeteilt, über ein Lenkventil 25, dem Lenkzylinder 17 sowie über ein 4/3-Wegeventil 26 dem doppeltwirkenden Hydraulikzylinder 22 zugeführt. An der Kolbenstange 18 des doppeltwirkenden Lenkzylinders ist ein Bowdenzug 27 befestigt, dessen anderes Ende einen Kolbenschieber 26A des 4/3-Wegeventils 26 mechanisch betätigt. Ein Gehäuse 26B des 4/3-Wegeventils ist an der Kolbenstange 22A des doppeltwirkenden Hydraulikzylinders befestigt, so daß eine selbsttätige Rückführung des Wegeventils 26 erfolgt.

Neben dieser mechanischen Betätigung des 4/3-Wegeventils 26 besteht auch die Möglichkeit einer elektromagnetischen oder hydraulischen Vorsteuerung.

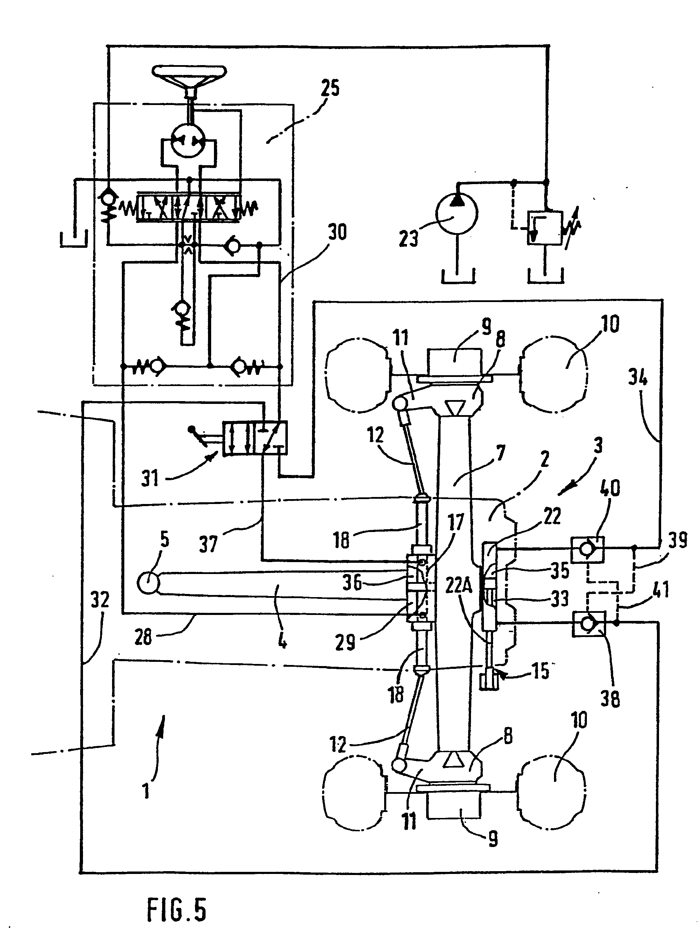

Die Einrichtung nach Fig. 5 stimmt bezüglich der als doppeltwirkender Hydraulikzylinder 22 ausgebildeten Stelleinrichtung, des Lenkzylinders 17 sowie des Lenkventils 25 mit der Version nach Fig. 4 überein. Von dem Lenkventil 25 aus führt eine erste Druckleitung 28 zu einem ersten Arbeitsraum 29 des Lenkzylinders 17. Eine zweite Druckleitung 30 führt vom Lenkventil 25 aus zu einem Umschaltventil 31, welches als 4/2-Wegeventil ausgebildet ist. An die vier gesteuerten Anschlüsse dieses Umschaltventils sind eine erste Verbindungsleitung 32, die zu einem ersten Arbeitsraum 33 des doppeltwirkenden Hydraulikzylinders 22 führt, und eine zweite Verbindungsleitung 34, die zu einem zweiten Arbeitsraum 35 desselben Hydraulikzylinders 22 führt, angeschlossen. Die beiden übrigen Anschlüsse des Umschaltventils 31 stehen mit der zweiten Druckleitung 30 und mit einer an einen zweiten Arbeitsraum 36 des Lenkzylinders angeschlossenen Leitung 37 in Verbindung. Innerhalb der ersten Verbindungsleitung 32 ist ein Rückschlagventil 38 angeordnet, das über eine Steuerleitung 39 abhängig vom Druck in der zweiten Verbindungsleitung 34 in seine Öffnungsstellung bewegbar ist. Gleichermaßen ist in der zweiten Verbindungsleitung 34 ein Rückschlagventil 40 angeordnet, das über eine Steuerleitung 41, abhängig vom Druck in der ersten Verbindungsleitung 32 aufsteuerbar ist.

Die Funktion der Einrichtung ist folgende : Wird über das Lenkventil 25 Druckmittel aus der Hydraulikpumpe 23 in die erste Druckleitung 28 und somit in den ersten Arbeitsraum 29 des Lenkzylinders 17 gefördert, so wird dessen Kolbenstange 18 in Fahrtrichtung gesehen nach links verschoben, und es wird aus dem zweiten Arbeitsraum 36 dieses Lenkzylinders 17 Hydrauliköl in die Leitung 37 über das Umschaltventil 31, die Druckleitung 30 und das Lenkventil 25 in einen Ölsumpf abgeführt. Die Lenkung der Räder 10 in die andere Fahrtrichtung, also in Fahrtrichtung gesehen nach links, erfolgt dadurch, daß über das Lenkventil 25, die zweite Druckleitung 30, das Umschaltventil 31 und die Leitung 37 dem zweiten Arbeitsraum 36 Druckmittel zugeführt wird, während aus dem ersten Arbeitsraum 29 über die erste Druckleitung 28 Hydrauliköl in den Ölsumpf verdrängt wird. In dieser in der Fig. 5 dargestellten Stellung des Umschaltventils 31 wird demnach ausschließlich dem Lenkzylinder 17 Druckmittel zugeführt, so daß eine Verlagerung des Fahrgestells 2 gegenüber der Achse 7 während des Lenkvorgangs nicht erfolgt.

Nimmt das Umschaltventil 31 seine zweite Stellung ein, so sind einerseits die zweite Druckleitung 30 und die zweite Verbindungsleitung 34 sowie andererseits die Leitung 37 und die erste Verbindungsleitung 32 miteinander verbunden. Wird nunmehr über das Lenkventil 25 zum Durchfahren einer Rechtskurve über die erste Druckleitung 28 der erste Arbeitsraum 29 des Lenkzylinders 17 mit Druckmittel beaufschlagt, so gelangt das aus dem zweiten Arbeitsraum 36 verdrängte Druckmittel über die Leitung 37 und die erste Verbindungsleitung 32 in den ersten Arbeitsraum 33 des Hydraulikzylinders 22. Dadurch wird das Fahrgestell 2 gegenüber der Radachse 7 nach links verlagert, so daß dem rechten kurveninneren Rad 10 ein größerer Freiraum zur Verfügung steht und die nicht dargestellte Hinterachse des Schleppers gegenüber der vorderen Radachse 7 eine den Wenderadius verringernde Winkellage einnimmt. Zum Durchfahren einer Linkskurve wird der zweiten Druckleitung 30 Druckmittel aus dem Lenkventil 25 zugeführt, das weiterhin über die zweite Verbindungsleitung 34 in den zweiten Arbeitsraum 35 des Hydraulikzylinders gelangt. Dabei wird aus dem ersten Arbeitsraum 33 und über die erste Verbindungsleitung 32 sowie die Leitung 37 Druckmittel in den zweiten Arbeitsraum 36 des Lenkzylinders verdrängt. Demzufolge werden gleichzeitig das Fahrgestell 2 gegenüber der Radachse 7 nach rechts verlagert und die Spurstangen 12 verlagern die Rädern 10 über die Lenkhebel 11 in eine Stellung zum Durchfahren der Linkskurve, wobei sich ebenfalls die Vorteile bezüglich des Freiraums für das kurveninnere Rad und die Reduzierung des Wendekreises des Schleppers 1 ergeben.

Da mittels des Umschaltventils 31 die Einrichtung wahlweise ausschließlich mit Achsschenkellenkung sowie Achsschenkellenkung und Fahrgestellverlagerung betrieben werden kann, besteht die Möglichkeit, beim Auftreten von Leckagen im System die beiden Zylinder 17 und 22 zueinander zu justieren. Die beiden in den Verbindungsleitungen 32 und 34 angeordneten Rückschlagventile dienen zur Blockierung des Hydraulikzylinders 22 in seiner jeweils eingestellten Stellung. Dadurch soll verhindert werden, daß auf das Fahrgestell 2 einwirkende Querkräfte zu einer ungewollten Verlagerung des Fahrgestells gegenüber der Radachse 7 führen. Das Rückschlagventil 38 oder 40 in der Verbindungsleitung 32 oder 34, die jeweils Druckmittel aus einem der beiden Arbeitsräume 33 oder 35 während eines Lenkvorgangs ableitet, wird in diesem Fall über die entsprechenden Steuerleitungen 39 oder 41 in seine Öffnungsstellung bewegt. Dies geschieht durch einen entsprechenden Druckaufbau in der jeweils anderen Verbindungsleitung.

Bezugzeichen

| | |
|---|---|
| 1 | Schlepper |
| 2 | Fahrgestell |
| 3 | Radachse |
| 4 | Schublenker |
| 5 | Kugelgelenk |
| 6 | Federdämpferelement |
| 7 | Achskörper |
| 8 | Achsschenkel |
| 9 | Radkopf |
| 10 | Räder |
| 10A | kurvenäußeres Rad |
| 10B | kurveninneres Rad |
| 11 | Spurhebel |
| 12 | Spurstange |
| 13 | Drehhebel |
| 14 | Drehantrieb |
| 15 | Seitenführungsstrebe |
| 16 | vertikaler Lenker |
| 17 | doppeltwirkender Lenkzylinder |
| 18 | Kolbenstangen |
| 22 | doppeltwirkender Hydraulikzylinder |
| 22A | Kolbenstange |
| 23 | Hydraulikpumpe |
| 24 | Stromteiler |
| 25 | Lenkventil |
| 26 | 4/3-Wegeventil |
| 26A | Kolbenschieber |

EP 0 400 033 B1

| 26B | Ventilgehäuse |
| 27 | Bowdenzug |
| 28 | erste Druckleitung |
| 29 | erster Arbeitsraum von 17 |
| 30 | zweite Druckleitung |
| 31 | Umschaltventil |
| 32 | erste Verbindungsleitung |
| 33 | erster Arbeitsraum von 22 |
| 34 | zweite Verbindungsleitung |
| 35 | zweiter Arbeitsraum von 22 |
| 36 | zweiter Arbeitsraum von 17 |
| 37 | Leitung |
| 38 | Rückschlagventil |
| 39 | Steuerleitung |
| 40 | Rückschlagventil |
| 41 | Steuerleitung |

## Patentansprüche

1. Aufhängung einer lenkbaren Radachse (3) eines Schleppers (1), an deren Achskörper (7) Radköpfe (9) mit Rädern (10) über Spurhebel (11) und eine geteilte oder ungeteilte Spurstange (12) mittels eines Lenkzylinders (17) schwenkbar geführt sind, wobei der Achskörper an seiner Rückseite mit einem deichselartigen Schublenker (4) starr verbunden ist, welcher zentrisch zur Quermittelebene des Achskörpers (7) und im wesentlichen horizontal verlaufend an seinem der Radachse (3) abgewandten Ende am Fahrgestell (2) des Schleppers (1) in einem Kugelgelenk (5) derart geführt ist, daß das Fahrgestell (2) durch Betätigung des Lenkzylinders (17) während eines Lenkvorgangs gegenüber der Radachse (3) um das Kugelgelenk (5) als Drehpunkt horizontal so verlagert wird, daß sich der Abstand zwischen dem Achsschenkel (8) des kurveninneren Rades (10B) und dem Fahrgestell (2) vergrößert, dadurch **gekennzeichnet**, daß zur horizontalen Verlagerung des Fahrgestells (2) während eines Lenkvorgangs zwischen der Radachse (3) und dem Fahrgestell (2) eine Seitenführungsstrebe (15) getrennt von der Spurstange (12), etwa parallel zum Achskörper (7) verlaufend, angeordnet ist.

2. Aufhängung einer lenkbaren Radachse nach Anspruch 1, dadurch **gekennzeichnet**, daß die Spurstangenabschnitte einer geteilten Spurstange (12) an einem Drehhebel (13) eines am Achskörper (7) oder Schublenker (4) befestigten Drehantriebes (14) angelenkt sind, an welchem mit radialem Abstand zur Drehachse die Seitenführungsstrebe (15) angelenkt ist.

3. Aufhängung einer lenkbaren Radachse nach Anspruch 1, dadurch **gekennzeichnet**, daß die Seitenführungsstrebe (15) mit einem Radius zum Achsschenkel (8) angelenkt ist.

4. Aufhangung einer lenkbaren Radachse nach Anspruch 1, dadurch **gekennzeichnet**, daß die Seitenführungsstrebe (15) Bestandteil eines doppeltwirkenden Hydraulikzylinders (22) ist, und daß der Hydraulikzylinder (22) mit dem Lenkzylinder (17) durch gemeinsame Druckmittelbeaufschlagung synchron betätigt wird.

5. Aufhängung einer lenkbaren Radachse nach Anspruch 4, dadurch **gekennzeichnet**, daß dem Hydraulikzylinder (22) ein 4/3-Wegeventil (26) vorgeschaltet ist, das in Abhängigkeit von der Stellung eines Lenkventils der Lenkung oder einer Kolbenstange des Lenkzylinders (17) elektromagnetisch, hydraulisch oder mechanisch betätigbar ist.

6. Aufhängung einer lenkbaren Radachse nach Anspruch 4, dadurch **gekennzeichnet**, daß zumindest ein Arbeitsraum (36) des Lenkzylinders (17) derart über eine Verbindungsleitung (32) an einen Arbeitsraum (33) des doppeltwirkenden Hydraulikzylinders (22) angeschlossen ist, daß das während des Lenkvorgangs aus dem Arbeitsraum (36) des Lenkzylinders (17) verdrängte Druckmittel dem Arbeitsraum (33) des Hydraulikzylinders (22) zugeführt wird.

7. Aufhängung einer lenkbaren Radachse nach Anspruch 6, dadurch **gekennzeichnet**, daß ein weiterer Arbeitsraum (35) des Hydraulikzylinders (22) während eines Lenkvorgangs unmittelbar aus einem Lenkventil (25) mit Druck beaufschlagbar ist, und das aus dem gegenüberliegenden Arbeitsraum (33) verdrängte Druckmittel dem Arbeitsraum (36) des Lenkzylinders (17) zugeführt wird.

8. Aufhängung einer lenkbaren Radachse nach Anspruch 7, dadurch **gekennzeichnet**, daß die beiden Arbeitsraume (33 und 35) des doppeltwirkenden Hydraulikzylinders (22) eine Druckleitung (30) des Lenkventils (25) und ein Arbeitsraum (36) des Lenkzylinders (17) an ein als 4/2-Wegeventil ausgebildetes Umschaltventil (31) angeschlossen sind, welches in seiner ersten Stellung die Druckleitung (30) mit dem Arbeitsraum (36) des Lenkzylinders (17) verbindet und die Verbindungsleitungen (32 und 34) sperrt und welches in seiner zweiten Stellung die Druckleitung (30) mit dem zweiten Arbeitsraum (35) des Hydraulikzylinders (22) und den zweiten Arbeitsraum (36) des Lenkzylinders (17) mit dem ersten Arbeitsraum (33) des Hydraulikzylinders (22) verbindet.

9. Aufhängung einer lenkbaren Radachse, die gegenüber dem Fahrgestell (2) mit mittels Federdämpferelementen (6) abgefedert ist, nach Anspruch 1, dadurch **gekennzeichnet**, daß die Federdämpferelemente (6) gelenkig mit dem Achskörper (7) und dem Fahrgestell (2) verbunden sind.

## Claims

1. Suspension of a steerable axle (3) of a tractor (1), at the axle body (7) of which wheel heads (9) with wheels (10) are pivotably guided via track arms (11) and a divided or undivided track rod (12) by means of a steering cylinder (17), the axle body being rigidly connected at its rear to a pole-type drag link (4), which is guided centrally with respect to the transverse central plane of the axle body (7) and essentially horizontally at its end which is distant from the axle (3) at the chassis (2) of the tractor (1) in a ball-and-socket joint (5) such that the chassis (2) is horizontally displaced with respect to the axle (3) about the ball-and-socket joint (5) as pivot point by operating the steering cylinder (17) during a steering operation so as to increase the spacing between the stub axle (8) of the wheel (10b) on the inside of the curve and the chassis (2), characterised in that a lateral guide rod (15), which extends separately from the track rod (12) approximately parallel to the axle body (7), is arranged between the axle (3) and the chassis (2) for the horizontal displacement of the chassis (2) during a steering operation.

2. Suspension of a steerable axle according to claim 1, characterised in that the track rod sections of a divided track rod (12) are articulated to a rotary lever (13) of a rotary drive (14), which is secured to the axle body (7) or drag link (4) and to which the lateral guide rod (15) is articulated with a radial spacing from the axis of rotation.

3. Suspension of a steerable axle according to claim 1, characterised in that the lateral guide rod (15) is articulated with a radius from the stub axle (8).

4. Suspension of a steerable axle according to claim 1, characterised in that the lateral guide rod (15) is a component part of a double-acting hydraulic cylinder (22), and that the hydraulic cylinder (22) is operated in synchronism with the steering cylinder (11) by pressure medium being admitted to them both together.

5. Suspension of a steerable axle according to claim 4, characterised in that a 4/3-way valve (26) is arranged before the hydraulic cylinder (22) and can be operated by electromagnetic, hydraulic or mechanical means according to the position of a steering valve of the steering assembly or a piston rod of the steering cylinder (17).

6. Suspension of a steerable axle according to claim 4, characterised in that at least one working chamber (36) of the steering cylinder (17) is connected via a connecting line (32) to a working chamber (33) of the double-acting cylinder (22) such that the pressure medium which is expelled from the working chamber (36) of the steering cylinder (17) during the steering operation is delivered to the working chamber (33) of the hydraulic cylinder (22).

7. Suspension of a steerable axle according to claim 6, characterised in that pressure medium is admitted to a further working chamber (35) of the hydraulic cylinder (22) directly from a steering valve (25) during a steering operation, and the pressure medium expelled from the opposite working chamber (33) is delivered to the working chamber (36) of the steering cylinder (17).

8. Suspension of a steerable axle according to claim 7, characterised in that the two working chambers (33 and 35) of the double-acting hydraulic cylinder (22), a pressure line (30) of the steering valve (25) and a working chamber (36) of the steering cylinder (17) are connected to a reversing valve (31), which is formed as a 4/2-way valve, connects the pressure line (30) to the working chamber (36) of the steering cylinder (17) and closes the connecting lines (32 and 34) in its first position and connects the pressure line (30) to the second working chamber (35) of the hydraulic cylinder (22) and the second working chamber (36) of the steering cylinder (17) to the first working chamber (33) of the hydraulic cylinder (22) in its second position.

9. Suspension of a steerable axle, which is spring-mounted on the chassis (2) by means of spring shock absorber elements (6), according to claim 1, characterised in that the spring shock absorber elements (6) are flexibly connected to the axle body (7) and the chassis (2).

## Revendications

1. Suspension d'un essieu directeur (3) d'un tracteur (1) où des têtes de roues (9) pourvues de roues (10) sont guidées de manière pivotante sur un corps d'essieu (7) par des leviers de direction (11) et une barre de connexion (12) au moyen d'un vérin de direction (17), le corps d'essieu étant raccordé rigidement, du côté de l'arrière, à un bras de poussée (4) servant de timon, lequel est centré par rapport au plan transversal médian du corps d'essieu (7) et s'étend sensiblement horizontalement jusqu'à son extrémité opposée à l'essieu (3), laquelle est montée sur le châssis (2) du tracteur (1) par un joint à rotule (5), de telle façon que, par actionnement du vérin de direction (17) pendant une manoeuvre de braquage, le châssis (2) se déplace horizontalement par rapport à l'essieu (3) en pivotant sur le joint à rotule (5) d'une manière qui augmente la distance entre le porte-fusée (8) de la roue (10B) intérieure au virage et le châssis (2), **caractérisée** en ce que, pour déplacer horizontalement le châssis (2) pendant un braquage, une barre transversale de guidage (15), approximativement parallèle au corps d'essieu (7) et séparée par rapport à la barre de connexion (12) est disposée entre l'essieu (3) et le châssis (2).

2. Suspension d'un essieu directeur selon la revendication 1, **caractérisée** en ce que les éléments de barre d'une barre de connexion subdivisée (12) sont articulés sur un levier pivotant (13) d'un entraînement pivotant (14) fixé au corps d'essieu (7) ou au bras de poussée (4) et sur lequel la barre transversale de guidage (15) est articulée à distance radiale de l'axe de pivotement.

3. Suspension d'un essieu directeur, selon la revendication 1, **caractérisée** en ce que la barre transversale de guidage (15) est articulée sur un rayon du porte-fusée (8).

4. Suspension d'un essieu directeur selon la revendication 1, **caractérisée** en ce que la barre transversale de guidage (15) fait partie d'un vérin hydraulique à double effet (22) et en ce que ledit vérin hydraulique (22) est actionné en synchronisme avec le vérin de direction (17) au moyen d'une alimentation commune en fluide.

5. Suspension d'un essieu directeur selon la revendication 4, **caractérisée** en ce que ledit vérin hydraulique (22) est précédé d'un distributeur 4/3 (26) qui peut être actionné électromagnétiquement, hydrauliquement ou mécaniquement en fonction de la position d'une soupape de direction ou d'une tige de piston du vérin de direction (17).

6. Suspension d'un essieu directeur selon la revendication 4, **caractérisée** en ce qu'au moins une chambre de travail (36) du vérin de direction (17) est raccordée par une conduite de liaison (32) à une chambre de travail (33) du vérin hydraulique à double effet (22) de façon que le fluide chassé de la chambre de travail (36) du vérin de direction (17) pendant le braquage soit transféré à la chambre de travail (33) dudit vérin hydraulique (22).

7. Suspension d'un essieu directeur selon la revendication 6, **caractérisée** en ce qu'une autre chambre de travail (35) dudit vérin hydraulique (22) est mise sous pression directement à partir d'une soupape de direction (25) pendant un braquage, le fluide chassé de la chambre de travail opposée (33) étant transféré à la chambre de travail (36) du verin de direction (17).

8. Suspension d'un essieu directeur selon la revendication 7, **caractérisée** en ce que les deux chambres de travail (33 et 35) du vérin hydraulique à double effet (22), une conduite de pression (30) de la soupape de direction (25) et une chambre de travail (36) du vérin de direction (17) sont raccordées à une soupape de commutation (31) constituée par un distributeur 4/2 qui, dans sa première position, relie la conduite de pression (30) à la chambre de travail (36) du vérin de direction (17) et bloque les conduites de liaison (32 et 34) et qui, dans sa seconde position, relie la conduite de pression (30) à la seconde chambre de travail (35) du verin hydraulique (22) et la seconde chambre de travail (36) du vérin de direction (17) à la première chambre de travail (33) du vérin hydraulique (22).

9. Suspension d'un essieu directeur qui est suspendu par rapport au châssis (2) au moyen d'éléments à ressort et amortisseur (6), selon la revendication 1, **caractérisée** en ce que lesdits éléments à ressort et amortisseur (6) sont raccordés de manière articulée au corps d'essieu (7) et au châssis (2).

FIG.1

FIG.2

FIG.3

FIG.4

FIG.5